**Europäisches Patentamt**

**European Patent Office**

**Office européen des brevets**

(19)

(11) Veröffentlichungsnummer: **0 195 877**
**A1**

## (12) EUROPÄISCHE PATENTANMELDUNG

(21) Anmeldenummer: 85810132.2

(22) Anmeldetag: 26.03.85

(51) Int. Cl.⁴: **C 23 C 18/12**, C 02 F 9/00, C 04 B 41/50

(43) Veröffentlichungstag der Anmeldung: 01.10.86 Patentblatt 86/40

(84) Benannte Vertragsstaaten: **AT BE CH DE FR GB IT LI LU NL SE**

(71) Anmelder: **Wegmueller, Fritz, Michelmattstrasse 470, CH-4652 Winznau (CH)**

(72) Erfinder: **Wegmueller, Fritz, Michelmattstrasse 470, CH-4652 Winznau (CH)**

(74) Vertreter: **Seehof, Michel et al, c/o AMMANN PATENTANWAELTE AG BERN Schwarztorstrasse 31, CH-3001 Bern (CH)**

(54) **Verfahren zur Herstellung von gleichmässigen, substraturabhängigen Metall-Hydroxidschichten auf Oberflächen und/oder zum Extrahieren von Metallen in Lösungen.**

(57) Oberflächen von festen oder flüssigen Stoffen werden mit elektrisch ungeladenen Metall-Hydroxiden in Berührung gebracht, wodurch sie Matrix-unabhängig mit einer gleichmäßigen Schicht abgesättigt werden.

Einerseits ist es dadurch möglich, auf Feststoffen einfach und wirtschaftlich gleichmäßige Beschichtungen, auch monomolekulare, aller Schichtdicken durchzuführen und Suspensionen und Emulsionen mit definierten Eigenschaften aufzubauen, andererseits aber auch Metalle aus Lösungen und Gewässer zu entfernen, ohne die lösliche Phase mit zusätzlichen Stoffen zu belasten. Das Verfahren ermöglicht auch, Oberflächen von suspendierten komplexen Systemen zu bestimmen.

Verfahren zur Herstellung von gleichmässigen, Substrat-
unabhängigen Metallschichten auf Oberflächen von festen
und flüssigen Stoffen und/oder zum Abreichern von Metallen in Lösungen

Es sind eine Reihe von Verfahren zur Herstellung von
Metallschichten bekannt, beispielsweise galvanische
Verfahren oder Aufdampfverfahren sowie Verfahren, bei
welchen eine Metallschicht, beispielsweise Nickel, aus
einer Lösung zum Niederschlag gebracht wird. Ausserdem
sind eine Reihe von Verfahren bekannt, um Metalle aus
einer Lösung zu entfernen, beispielsweise bei der Wasseraufbereitung. Nach Wissen des Anmelders beziehen sich
sämtliche vorbekannte sorptive Metall-Beschichtungs-
Verfahren auf Adsorber-abhängige, oberflächliche Metallanreicherungen. Es ist nun das Ziel der vorliegenden
Erfindung, ein Verfahren zur Adsorber-unabhängigen Herstellung von gleichmässigen Metallschichten und/oder zum
Ballaststoffarmen Abreichern von Metallen in Lösungen
anzugeben, das einfach und wirtschaftlich durchgeführt
werden kann.

Die Erfindung wird nun im einzelnen anhand von Ausführungsbeispielen näher erläutert werden:

Es wurde im Rahmen der vorliegenden Erfindung gefunden,
dass ungeladene Metall-Hydroxide in verschiedenen Lösungsmitteln, beispielsweise in Wasser oder organischen
polaren Lösungsmitteln an Oberflächen von festen oder
flüssigen Stoffen in monomolekularen Schichten sorbieren
und zwar durch Kontaktieren dieser Oberflächen mit solchen Lösungen. Das Matrix-unabhängige Sorptionsverhalten
von ungeladenen Metall-Hydroxiden wurde eingehend am
Beispiel von Zink-Hydroxid nachgewiesen, wie dies in der
Arbeit "Physisorptive Behavior of Zinc-Aquo-Hydroxide",
im "Journal of Colloid and Interface Science"
des gleichen Autors eingehend beschrieben ist. Weiter führende Arbeiten zeigen, dass dies nicht nur für Zinkhydroxid sondern für Metall-Hydroxide im allgemeinen gilt.

Das Belegen der Oberflächen von festen oder flüssigen Stoffen mit monomolekularen Schichten von ungeladenen Metall-Hydroxiden erfolgt durch Kontaktieren der Oberflächen mit Metall-Hydroxidhaltigen Lösungen. Tauch-, Suspendier-, Dispergier- oder Sprühverfahren können je nach Gestalt und Eigenschaften des Absorbers eingesetzt werden. Sämtliche Stoffe, die Phasengrenzen zu den Belegungslösungen ausbilden, d.h. den Lösungsbedingungen der Metall-Lösungen widerstehen, können mit Filmen von ungeladenen Metall-Hydroxiden belegt werden. Die Metall-Lösungen werden durch Lösen von Metall-Salzen in Wasser oder organischen Lösungsmitteln hergestellt. Als organische Lösungsmittel eignen sich Stoffe, die ungeladene Metall-Hydroxide lösen. Der pH-Wert der Metall-Lösungen richtet sich nach dem Existenzbereich der Hydroxide der verwendeten Metalle und kann demzufolge zwischen pH~2 und ~14 variieren. Die Metallgehalte der Metall-Lösungen sind durch die Löslichkeitsgrenzen der gelösten Metallspezies nach oben beschränkt. Durch Variieren der Metallkonzentrationen, der pH-Werte und der Temperaturbedingungen, lassen sich unterschiedliche Metall-Sorbat-Dichten erzeugen. Die physikalischen Verfahrensparameter beeinflussen die Belegungsraten der ungeladenen Metall-Hydroxide stark. Belegungszeiten von wenigen Sekunden bis zu mehreren Tagen können je nach Anordnung der Verfahren auftreten.

Die sorbierten Metall-Hydroxid-Filme lassen sich durch Trocknen, Reduzieren oder Umsetzen mit anorganischen oder organischen Stoffen leicht in wohldefinierte Oxid-, Metall oder andere modifizierte Oberflächenfilme überführen, welche in den verschiedensten Oberflächentechniken angewendet werden können. So beispielsweise lassen sich Katalysatoren, optische Gläser, Leuchtstoffe, Halbleiterbauelemente, Photozellen, Fluoreszenzfilme, Sonnenkollektoren u.a.m. günstig herstellen.

Das Matrix-unabhängige Verhalten der Metall-Aquo-Hydroxide kann aber auch bei Gewässerreinigungsprozessen oder bei der Metallgewinnung aus Gewässern genutzt werden. Von besonderer Bedeutung ist dabei, dass die Gewässer nicht durch lösliche Stoffe belastet werden müssen, weil inerte Partikel von hoher spezifischer Oberfläche, an denen die Metall-Hydroxide sorbieren, kontinuierlich und rückstandsfrei vom Wasser abgetrennt werden können. Eine wesentliche Voraussetzung für das wunschgemässe Arbeiten von derartigen Verfahren besteht allerdings darin, dass allfällig störende Komplexbilder vorher abgetrennt werden müssen.

Auch Methoden zum Erfassen der Oberflächenanteile von komplexen Lösungs-gebundenen anorganischen und organischen Mehrstoffkörper, wie z.B. Kolloide, Ausfällungen jeglicher Art, Gewebe von Pflanzen und Tieren u.a.m., bei denen Oberflächen-Bestimmungen lediglich im suspendierten Zustand sinnvolle Ergebnisse liefern, können durch das Matrix-unabhängige Sorptionsverhalten der ungeladenen Metall-Hydroxide erfasst werden. Die dabei unerlässliche Kenntnis der Metall-Sorbat-Dichte lässt sich leicht durch vergleichbare Sorptionsexperimente an glasigen, porenfreien Feststoffen ermitteln.

Die unten aufgeführten Sorptionsbedingungen werden anhand von Zink aufgezeigt. Daraus geht hervor, unter welchen Sorptionsbedingungen die Stoffe Anorthosit, Ilmenit, Kieselgel, Quarz, Glas, Borcarbid, Germanium, Kaliumbromid, Cäsiumjodid, Cäsiumbromid, Anionen- und Kationenaustauscherharze, PEG-dimethacrylat mit dem ungeladenen Zink-Aquo-Hydroxid belegt wurden, wobei die Stoffe auch suspendiert waren.

Zn-Sorptionsbedingungen

Lösungsmittel: Bidest. Wasser $>0.1\%$

organische,

insbes. polare $\leqslant 99\%$

Lösungsmittel

Zn-Konzentrationen $\qquad \leqslant 8 \cdot 10^{-6}$ gZn/gLsg ($H_2O$ 5%)

$\leqslant 2 \cdot 10^{-6}$ gZn/gLsg ($H_2O$ 5%)

pH-Bereich $\qquad$ 5 - 10

$CO_2$-Konzentration $\qquad < 10$ mg$CO_2$/l

Konzentrationen von $Na^+$,
Br und $NH_{3_{tot}}$ $\qquad \leqslant 1 \cdot 10^{-4}$ Mol/l

Volumen der heterogenen
Gemische $\qquad$ 50 - 800 ml

Feststoffkonzentrationen
bei Pulvern $\qquad < 10$ mg/Lsg

Austauschzeiten $\qquad$ 10 Sekunden bis 60 Tage

Temperatur $\qquad$ 0 - 75°C

Wie bereits weiter oben gesagt wurde, gelten die Sorptionsbedingungen nicht nur für Zink sondern auch für andere Metalle, wie beispielsweise Fe, Hg, Pb, Cu, Ni, V, Cr, Co, Cd, Ca, Mg, Mn und andere, wobei die ungeladenen Hydroxide die aufgeführten Metalle innerhalb der angegebenen pH-Grenzen von 2 - 14 existent sind. Ausserdem können die Metall-Hydroxide auch an weitere Stoffe, als die oben angegebenen, sorbieren.

Beispiel 1: Metallene Gegenstände können durch Eintauchen in Zink-Bäder oder durch Bespritzen mit Zink-Lösungen, die die oben definierten Bedingungen aufweisen, verzinkt werden. Die beschichteten Metallteile werden anschliessend getrocknet und unter erhöhten Temperaturen und reduzierenden Bedingungen im Ofen reduziert. Dadurch, dass der Vorgang beliebig oft wiederholt werden kann, ist es möglich, regelmässige Zink-Schichten der gewünschten Dicke aufzuziehen. An Stelle von Zink kann selbstverständlich auch ein anderes Metall verwendet werden. Das Verfahren kann bei der Verwendung anderer Metalle zum Herstellen von Halbleiterelementen, optischen Gläsern u.a.m. eingesetzt werden.

Beispiel 2: Metallgehalte in verschmutzten Gewässern, die nicht mit störenden Mengen an komplexbildenden Stoffen belastet sind, wie sie etwa die Grundwasser darstellen, lassen sich durch Zugabe von Oberflächen-reichen, inerten Feststoffen herabsetzen. Als Beispiele für derartige Feststoffe können poröse, feinkörnige Silikat-, Quarz- oder Aluminiumoxid-Kornfraktionen erwähnt werden. Die zugesetzten Partikel sättigen sich beim Kontakt mit den belasteten Gewässern mit Metall-Aquo-Hydroxiden oberflächlich ab und können leicht in Sedimentationsbecken aufgefangen, entnommen, regeneriert und dem Gewässer erneut zugeführt werden. Dieses Verfahren kann auch zur Gewinnung von Metallen aus Gewässern oder in Recycling-Verfahren eingesetzt werden. Gegebenenfalls müssen die komplexbildenden Stoffe ausgefällt werden.

Beispiel 3: Emulsionen oder Suspensionen: Da zwischen den sorbierten Metall-Aquo-Hydroxiden und den Metall-Lösungen ein Gleichgewicht bestehen, lassen sich die Oberflächen von feindispergierten flüssigen Teilchen zeitinvariant in Metall-Lösungen mit ungeladenen Metall-Hydroxid-Filmen anreichern. Werden die dispergierten Teilchen mit korrosionshemmenden oder photosensitiven Metallschichten belegt, lassen sich Emulsionen oder Suspensionen von beliebigen Dispersionsgraden herstellen, die in der Metall- oder Phototechnik angewendet werden können.

Beispiel 4: Oberflächen von suspendierten Teilchen, wie z.B. Kolloide, Gewebeteile von Pflanzen und Tieren, lassen sich durch die Zugabe von geeigneten Metallsalzen zu den Suspensionen so bestimmen, dass Lösungen geschaffen werden, die ungeladene Metall-Hydroxide in den Lösungsphasen enthalten. Da die Metall-Hydroxide Matrix-unabhängig und gleichmässig auf den suspendierten Teilchen sorbieren, können durch nachfolgende Analysen der sorbierten Metallanteile und der Kenntnis der Metall-Sorbat-Dichten, die in den Lösungen wirksamen Oberflächen der untersuchten Partikel bestimmt werden. Die Metall-Sorbat-Dichten lassen sich durch Belegen von glasigen Festkörpern leicht bestimmen, wobei darauf geachtet werden muss, dass vergleichbare Lösungsverhältnisse gewählt werden.

Aus den obigen Beispielen geht hervor, dass Metall-Hydroxid-Schichten mit monomolekularem Aufbau hergestellt werden können, durch Bereitstellen von ungeladenen Metall-Hydroxidkomplexen in Lösungsmittel, wobei diese Lösungen einen relativ grossen pH-Bereich von 2 - 14, je nach Metall und Lösungsmittel, überstreichen können. Ferner wird es erstmals möglich, monomolekulare Schichten auf die Oberflächen von feindispergierten, flüssigen Teilchen aufzubringen und eventuell weiterzuverarbeiten. Die Erkenntnis, ungeladene Metall-Hydroxide mit geeigneten Oberflächen zu kontaktieren, führt aber auch dazu, unerwünschte Metalle, vorallem schädliche Metalle wie Quecksilber, Cadmium und dergleichen aus Gewässern zu entfernen, wobei in der Regel keine zusätzlichen Chemikalien verwendet werden müssen, sondern nur geeignete Kontaktstoffe, wie poröse, feinkörnige Silikat-, Quarz- oder Aluminiumoxydpartikel bereitgestellt werden müssen. In geschlossenen Kreisläufen kann dafür auch ein geeignetes Austauschharz verwendet werden.

0195877

Patentansprüche

1. Verfahren zur Herstellung von gleichmässigen, Substrat-unabhängigen Metall-Hydroxidschichten auf Oberflächen von festen und flüssigen Stoffen und/oder zum Abreichern von Metallen in Lösungen, wobei eine Lösungsphase verwendet wird, die elektrisch ungeladene Metall-Hydroxide enthält, die mit den Oberflächen der festen oder flüssigen Stoffe in Berührung gebracht werden.

2. Verfahren nach Anspruch 1, dadurch gekennzeichnet, dass die Lösung einen pH-Wert von 2 - 14 aufweist.

3. Verfahren nach Anspruch 1 oder 2, dadurch gekennzeichnet, dass $\geqq$ 0.1% Wasser oder $\leqq$ 99% organische Lösungsmittel verwendet werden, die ungeladene Metall-Hydroxid-Anteile lösen.

4. Verfahren nach einem der Ansprüche 1 bis 3, dadurch gekennzeichnet, dass das zu beschichtende Metall in der Lösungsphase ungeladene Metall-Hydroxid-Anteile ausbildet.

5. Verfahren nach einem der Ansprüche 1 bis 4, dadurch gekennzeichnet, dass als Substrat sämtliche Stoffe, die Phasengrenzen gegenüber Metall-Lösungen ausbilden, verwendet werden.

6. Verfahren nach einem der Ansprüche 1 bis 5 zur Herstellung einer Metall-Hydroxidschicht auf einem Werkstück, dadurch gekennzeichnet, dass das beschichtete Werkstück anschliessend getrocknet und unter erhöhter Temperatur und reduzierenden Bedingungen in einem Ofen reduziert wird.

7. Verfahren nach einem der Ansprüche 1 bis 5 zur Abreicherung von Metallen in Gewässern, dadurch gekennzeichnet, dass dem Gewässer, aus dem gegebenenfalls komplexbildende Stoffe ausgefällt wurden, poröse, inerte Partikel, wie Silikat-, Quarz- Aluminium- oder organische Kornfraktionen beigegeben werden und die oberflächengesättigten Partikel aufgefangen, entnommen, regeneriert und erneut dem Gewässer zugeführt werden.

8. Verfahren nach einem der Ansprüche 1 bis 5 zur Herstellung von Metall-Hydroxidschichten auf Oberflächen von flüssigen Teilchen.

9. Verfahren nach Anspruch 8, dadurch gekennzeichnet, dass die dispergierten Teilchen mit korrosionshemmenden oder photoempfindlichen Metallschichten belegt werden.

10. Verfahren nach einem der Ansprüche 1 bis 5 zum Beschichten von suspendierten Teilchen, dadurch gekennzeichnet, dass anschliessend die sorbierten Metall-Anteile analysiert werden, um deren wirksame Oberfläche zu bestimmen.

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 517 847 (COMPAGNIE GENERALE D'ELECTICITE) * Zusammenfassung 1 * | 1-4,6 | C 23 C 18/12 C 02 F 9/00 C 04 B 41/50 |
| X | US-A-3 579 443 (HORST) * Spalte 2, Zeilen 15-28 * | 1-4,7 | |
| X | GB-A-1 119 180 (MORGANITE RESEARCH AND DEVELOPMENT LTD.) * Seite 1, Zeilen 27-51 * | 1-4,6 | |

RECHERCHIERTE SACHGEBIETE (Int. Cl.4)

C 23 C
C 04 B
C 02 F

Der vorliegende Recherchenbericht wurde für alle Patentansprüche erstellt.

| Recherchenort | Abschlußdatum der Recherche | Prüfer |
|---|---|---|
| DEN HAAG | 07-11-1985 | NGUYEN THE NGHIEP |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82